# EUROPÄISCHE PATENTANMELDUNG

(11) **EP 2 958 225 A2**
(43) Veröffentlichungstag der Anmeldung: **23.12.2015**
(21) Anmeldenummer: 15169194.6
(22) Anmeldetag: 26.05.2015
(51) Int. Cl.: H02M 7/483

(54) **VERFAHREN ZUM BETREIBEN EINES EINEN SPANNUNGSZWISCHENKREIS AUFWEISENDEN MODULAREN MEHRSTUFENSTROMRICHTERS**

(30) Priorität: 20.06.2014 DE 102014211892
(71) Anmelder: Siemens Aktiengesellschaft, 80333 München (DE)
(72) Erfinder: Dommaschk, Mike, 91096 Möhrendorf (DE); Ebner, Günter, 91239 Henfenfeld (DE); Lang, Jörg, 95346 Stadtsteinach (DE); Würflinger, Klaus, 90419 Nürnberg (DE)

(57) **Zusammenfassung**

Verfahren zum Betreiben eines einen Spannungszwischenkreis aufweisenden modularen Mehrstufenstromrichters, der mehrere Stromrichtermodule aufweist, wobei jedes Stromrichtermodul eine Reihenschaltung von Submodulen aufweist und jedes Submodul einem Spannungsintervall zugeordnet ist und Schaltelemente und ein Energiespeichermittel aufweist, wobei einem Stromrichtermodul zur Vergrößerung der Aussteuerreserve eine eine Spannungsverschiebung zwischen Nullpunkten des modularen Mehrstufenstromrichters auf der Wechselspannungs- und der Gleichspannungsseite erzeugende Nullsystemspannung aufgeschaltet wird, dadurch gekennzeichnet, dass Amplitude und Phasenlage der Ausgangsspannung eines Stromrichtermoduls mittels der Nullsystemspannung so gewählt werden, dass unter Berücksichtigung der Spannung der Energiespeichermittel eine möglichst große Aussteuerreserve erhalten wird.

## Beschreibung

Die Erfindung betrifft ein Verfahren zum Betreiben eines einen Spannungszwischenkreis aufweisenden modularen Mehrstufenstromrichters, der mehrere Stromrichtermodule aufweist, wobei jedes Stromrichtermodul eine Reihenschaltung von Submodulen aufweist und jedes Submodul einem Spannungsintervall zugeordnet ist und Schaltelemente und ein Energiespeichermittel aufweist, wobei einem Stromrichtermodul zur Vergrößerung der Aussteuerreserve eine eine Spannungsverschiebung zwischen Nullpunkten des modularen Mehrstufenstromrichters auf der Wechselspannungs- und der Gleichspannungsseite erzeugende Nullsystemspannung aufgeschaltet wird.

Ein derartiger modularer Mehrstufenstromrichter wird auch als Modularer Multilevel Stromrichter (modular multilevel converter, MMC) bezeichnet.

Üblicherweise umfassen die Submodule, die auch als Phasenelemente bezeichnet werden, jeweils eine Anordnung von Schaltelementen, die jeweils mindestens zwei abschaltbare Leistungshalbleiter und mindestens zwei jeweils dazu parallel geschaltete Freilaufdioden und Energiespeichermittel aufweisen.

Aus der WO 2007/028349 A1 ist ein modularer Mehrstufenstromrichter mit mehreren Stromrichtermodulen bekannt. Derartige Vorrichtungen weisen beispielsweise zwei gleichspannungsseitig verbundene Stromrichter auf, um elektrische Energie zwischen zwei elektrisch getrennten Wechselspannungsnetzen zu übertragen und diese Übertragung gezielt zu steuern. Eine solche Steuerung ist notwendig, da in Wechselspannungsnetzen lokale Überlastungen oder ungleiche Lastverteilungen auftreten können. Diese Überlastungen können durch die geregelte Energieübertragung ausgeglichen werden. Derartige Vorrichtungen werden als HGÜ-Anlagen (HGÜ = Hochspannungs-GleichstromÜbertragung) bezeichnet. Bei einem Spannungszwischenkreis (Voltage Source Converter, VSC) mit abschaltbaren Leistungshalbleitern wird ein Energiespeichermittel, z. B. ein Kondensator, benötigt. Eine derartige HGÜ-Anlage umfasst üblicherweise einen ersten Umrichter als Stromrichter zur Umwandlung der Wechselspannung in eine Gleichspannung, ein Übertragungskabel als Gleichspannungsleitung sowie einen zweiten Umrichter als Stromrichter zur Umwandlung der Gleichspannung in eine Wechselspannung. Ein Stromrichter umfasst mehrere Zweige, wobei ein oberer und ein unterer Zweig zusammen ein Phasenmodul bilden, das auch als Stromrichterphase bezeichnet wird. Beispielsweise können drei Phasenmodule vorhanden sein. Jedes Phasenmodul umfasst eine Vielzahl von in Reihe angeordneten Submodulen mit Schaltelementen, wobei ein Schaltelement zwei Leistungshalbleiter, zwei Dioden sowie einen Kondensator als Energiespeichermittel aufweist. Die Leistungshalbleiter sind elektronische Schalter, z. B. IGBTs. In der WO 2007/028349 A1 ist als Beispiel eines Stromrichters eine H-Schaltung beschrieben, die in einer HGÜ-Anlage einsetzbar ist.

Bei Mehrstufenstromrichtern mit Spannungszwischenkreis wird die maximal realisierbare Amplitude der Ausgangswechselspannung durch die Zwischenkreisspannung des zentralen Energiespeichermittels, das z. B. als Speicherkondensator ausgebildet sein kann, bestimmt. Das Verhältnis der Summenspannung der Energiespeichermittel zu der Amplitude der Modulspannung des zugehörigen Stromrichtermoduls wird Aussteuergrad genannt, für den eine obere Grenze existiert.

Es ist bereits bekannt, bei Stromrichtern den Aussteuergrad zu erhöhen, indem eine Nullsystemspannung aufgeschaltet wird. Eine Nullsystemspannung, die auch als Nullsystem bezeichnet wird, ist eine Spannungsverschiebung zwischen den natürlichen Nullpunkten eines Stromrichters auf der Wechselspannungs- und der Gleichspannungsseite, wodurch der Aussteuergrad erhöht wird. Ein Nullsystem, das z. B. drei Phasen aufweist, kann durch die Gleichung u₀(t)=(u₁(t)+u₂(t)+u₃(t))/3 ausgedrückt werden.

Allerdings kann in der Praxis beim Aufschalten eines Nullsystems das Problem auftreten, dass die zum Schalten zur Verfügung stehende Kondensatorspannung kleiner als die momentane Zweigspannung des Stromrichtermoduls ist, sodass dieser übersteuert wird. Dementsprechend ist der Aussteuergrad in diesen Fällen begrenzt. Um diesen Nachteil zu beseitigen, müsste eine größere Anzahl von Stromrichtermodulen eingesetzt oder die Größe der Energiespeichermittel erhöht werden. Allerdings führen beide Maßnahmen zu erhöhten Kosten.

Der Erfindung liegt daher die Aufgabe zugrunde, ein Verfahren zum Betreiben eines einen Spannungszwischenkreis aufweisenden modularen Mehrstufenstromrichters anzugeben, bei dem permanent eine Aussteuerreserve vorhanden ist.

Zur Lösung dieser Aufgabe ist bei einem Verfahren der eingangs genannten Art erfindungsgemäß vorgesehen, dass Amplitude und Phasenlage der Ausgangsspannung eines Stromrichtermoduls mittels der Nullsystemspannung so gewählt werden, dass unter Berücksichtigung der Spannung der Energiespeichermittel eine möglichst große Aussteuerreserve erhalten wird.

Das Aufschalten einer Nullsystemspannung bewirkt eine Spannungsverschiebung zwischen dem Nullpunkt des MMC und den Spannungen auf der Wechselspannungsseite des Mehrstufenstromrichters, wodurch eine Erhöhung der Aussteuerreserve ermöglicht wird. Bei dem erfindungsgemäßen Verfahren werden Amplitude und Phasenlage der Ausgangsspannung eines Stromrichtermoduls mittels des Nullsystems so gewählt, dass jederzeit eine genügende Stellreserve vorhanden ist. Das bedeutet, dass die sich im Zeitverlauf ändernde Spannung der Energiespeichermittel stets höher als die Ausgangsspannung eines Stromrichtermoduls ist, sodass eine Energieübertragung von den Energiespeichermitteln an das bzw. die Stromrichtermodule möglich ist.

Durch die Erfindung ergibt sich der Vorteil, dass bei gleich bleibender Aussteuerreserve die Anzahl der Submodule reduziert werden kann. Alternativ oder zusätzlich kann die Größe der Energiespeichermittel verringert werden.

Bei dem erfindungsgemäßen Verfahren wird der zeitliche Verlauf der Spannung des Energiespeichermittels berücksichtigt, wodurch die Aussteuerreserve weiter erhöht werden kann, während bei einem herkömmlichen Verfahren nur die Amplitude der Ausgangsspannung gegenüber dem Nullpunkt des Stromrichters minimiert wird.

Vorzugsweise wird beim Festlegen von Amplitude und Phasenlage der Ausgangsspannung eines Stromrichtermoduls die Summe der Spannungen aller Energiespeichermittel eines Stromrichtermoduls berücksichtigt.

Der Nachteil des herkömmlichen Verfahrens wird durch das erfindungsgemäße Verfahren beseitigt, indem die Ausgangsspannung des Mehrstufenstromrichters mittels der aufgeschalteten Nullsystemspannung so modifiziert wird, dass stets eine maximal mögliche Spannungsdifferenz vorhanden ist, und somit zu jedem Zeitpunkt eine maximal mögliche Aussteuerreserve erreicht werden kann.

Bei dem erfindungsgemäßen Verfahren wird es bevorzugt, dass ein Kondensator als Energiespeichermittel verwendet wird.

Es liegt auch im Rahmen der Erfindung, dass bei dem Verfahren ein modularer Mehrstufenstromrichter mit drei Phasenmodulen und sechs Stromrichtermodulen, die auch als Konvertermodule bezeichnet werden, zum Einsatz kommt.

Vorzugsweise werden erfindungsgemäß die Spannungen der Energiespeichermittel aller sechs Stromrichtermodule (Konvertermodule) verschoben, d.h. beispielsweise werden die Spannungen der sechs Kondensatoren verschoben.

Gemäß einer bevorzugten Ausgestaltung des erfindungsgemäßen Verfahrens wird eine auf der 3. Oberschwingung basierende Nullsystemspannung aufgeschaltet. Grundsätzlich kann jedoch auch ein beliebiges anderes Nullsystem aufgeschaltet werden. Im Rahmen der Erfindung wurde herausgefunden, dass eine auf der 3. Oberschwingung basierende Nullsystemspannung besonders gut geeignet ist, um den Oberschwingungsgehalt zu reduzieren.

Alternativ kann eine auf symmetrierter Sinusmodulation beruhende Nullsystemspannung aufgeschaltet werden.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Fig. 1: den Aufbau eines herkömmlichen modularen Mehrstufenstromrichters;
- Fig. 2 und 3: den zeitlichen Verlauf der Spannung eines Stromrichtermoduls sowie den zeitlichen Verlauf der Summenspannung der Energiespeichermittel bei einem herkömmlichen Verfahren;
- Fig. 4 und 5: den zeitlichen Verlauf der Spannung eines Stromrichtermoduls und den zeitlichen Verlauf der Summenspannung der Energiespeichermittel gemäß einem Ausführungsbeispiel des erfindungsgemäßen Verfahrens;
- Fig. 6 und 7: den zeitlichen Verlauf der Spannung eines Stromrichtermoduls und den zeitlichen Verlauf der Summenspannung der Energiespeichermittel gemäß einem weiteren Ausführungsbeispiel des erfindungsgemäßen Verfahrens; und
- Fig. 8: die Berechnung der Nullsystemspannung für die beiden erfindungsgemäßen Ausführungsbeispiele.

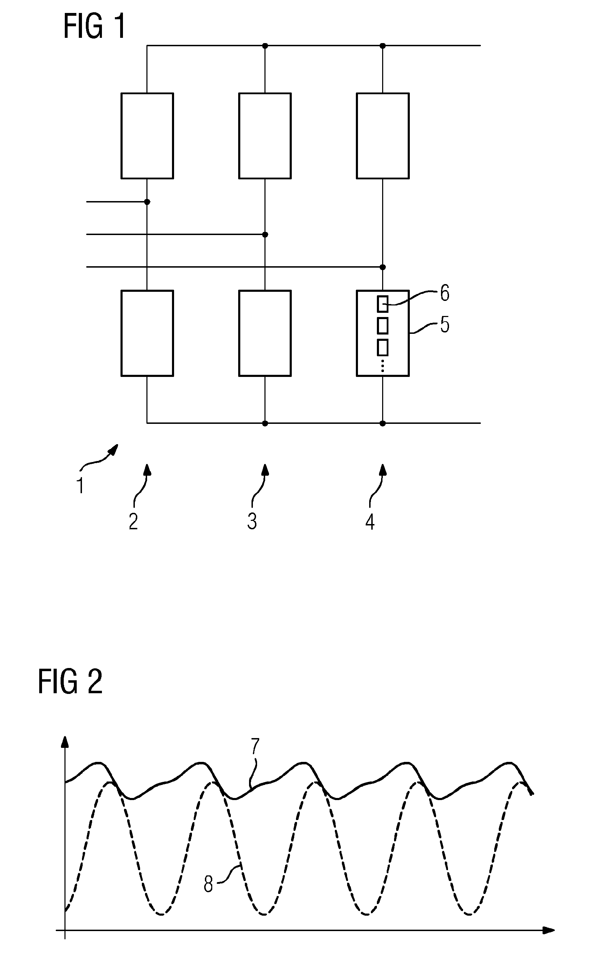

Fig. 1 zeigt einen herkömmlichen modularen Mehrstufenstromrichter 1, der für ein dreiphasiges Wechselspannungsnetz vorgesehen ist und drei Phasenmodule 2, 3, 4 aufweist, die auch als Stromrichtermodule bezeichnet werden. Jedes Phasenmodul ist mit einer Phase des Wechselspannungsnetzes verbunden. Die Phasenmodule 2, 3, 4 umfassen insgesamt sechs Stromrichtermodule 5, die jeweils eine Vielzahl von in Reihe geschalteten Submodulen 6 aufweisen, die jeweils einem Spannungsintervall zugeordnet sind. Jedes Submodul 6 weist Schaltelemente und ein Energiespeichermittel auf.

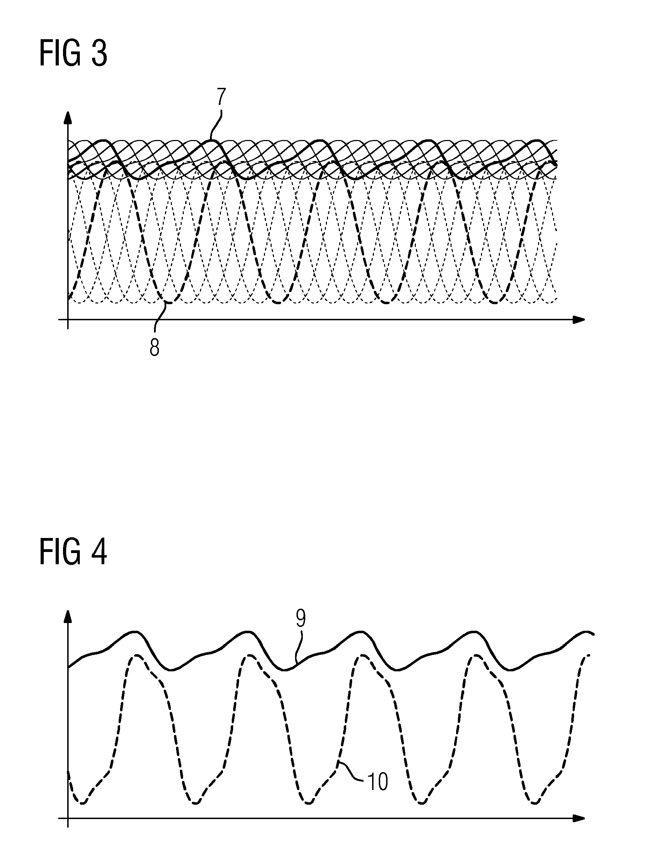

Der herkömmliche modulare Mehrstufenstromrichter umfasst in diesem Fall sechs Einphasenstromrichter mit einem Stromrichtermodul für jeden oberen und unteren Zweig. In Fig. 2 ist der Verlauf der Modulspannung eines einzelnen herkömmlichen Stromrichtermoduls dargestellt, von denen wie bereits erwähnt sechs vorhanden sind, zwischen denen jeweils ein Phasenunterschied vorhanden ist. Die zugehörige Fig. 3 zeigt die Spannungsverläufe aller sechs Stromrichtermodule des Mehrstufenstromrichters.

In den Fig. 2 und 3 ist zusätzlich der Verlauf der Spannung 7 eines Energiespeichermittels gezeigt, das in dem dargestellten Ausführungsbeispiel als Kondensator ausgebildet ist. Auf der waagerechten Achse ist die Zeit aufgetragen, auf der senkrechten Achse ist die Spannung 8 der Phase eines Stromrichtermoduls aufgetragen.

In den Darstellungen der Fig. 2 und 3 erkennt man, dass die Spannung 7 des Energiespeichermittels und die Spannung 8 der Phase eines Stromrichtermoduls sich während bestimmter Zeitpunkte berühren. Das bedeutet, dass der Mehrstufenstromrichter dann seine maximale Aussteuerung erreicht hat und keine Stellreserve mehr vorhanden ist.

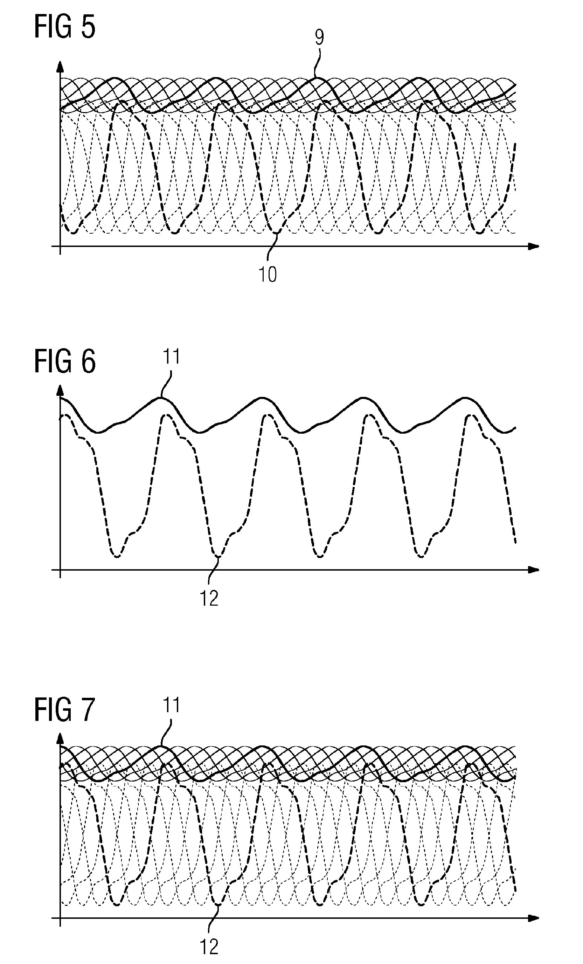

Die Fig. 4 und 5 sind ähnliche Diagramme wie die Fig. 2 und 3 und zeigen den mit dem Bezugszeichen 9 bezeichneten zeitlichen Verlauf der Spannung eines Energiespeichermittels und den mit dem Bezugszeichen 10 bezeichneten zeitlichen Verlauf der Spannung eines Stromrichtermoduls bei der Durchführung des Verfahrens. Fig. 5 zeigt den zeitlichen Verlauf der Spannungen aller sechs Stromrichtermodule.

Anders als in dem vorangehenden Ausführungsbeispiel ist dem Mehrstufenstromrichter ein Nullsystem, das heißt eine Nullsystemspannung aufgeschaltet worden, das bzw. die auf der 3. Oberschwingung beruht. Die sechs Spannungen der Stromrichtermodule dienen als Eingangsgrößen bei der Berechnung des Nullsystems. Nach der Berechnung der Nullsystemspannung wird diese der Grundschwingung aufgeschaltet, d.h. der Grundschwingung überlagert. Dadurch ergibt sich der in den Fig. 4 und 5 gezeigte Verlauf der Spannungen der Stromrichtermodule, der durch eine Beeinflussung der in den Fig. 2 und 3 gezeigten Verläufe entstanden ist. Amplitude und Phase der Spannungen der Stromrichtermodule sind dadurch so verschoben, dass zu jedem Zeitpunkt ein Spannungsunterschied zwischen dem Energiespeichermittel und der Modulspannung vorhanden ist. Durch diese gezielte Beeinflussung von Amplitude und Phasenlage der Spannungen aller Stromrichtermodule ergibt sich ein Spannungsverlauf, bei dem jederzeit eine Aussteuerreserve vorhanden ist.

Die Fig. 6 und 7 zeigen ein Ausführungsbeispiel des Verfahrens zum Betreiben des Mehrstufenstromrichters, bei dem ein auf symmetrierter Sinusmodulation basierendes Nullsystem aufgeschaltet wird. Die symmetrierte Sinusmodulation wird auch als Raumzeigermodulation bezeichnet. Aus den momentanen Spannungen wird dabei ein Korrektursystem gebildet als die -0,5-fache Summe des betragsmäßig größten und kleinsten Spannungswerts. Dieses Nullsystem wird dann zu den Spannungen addiert, wodurch sich die in den Fig. 6 und 7 gezeigten Spannungsverläufe ergeben. Das Bezugszeichen 11 bezeichnet dabei die Spannung des Energiespeichermittels, das Bezugszeichen 12 den Verlauf einer Spannung eines Stromrichtermoduls. Fig. 7 zeigt die Verläufe aller sechs Spannungen 12 der Stromrichtermodule.

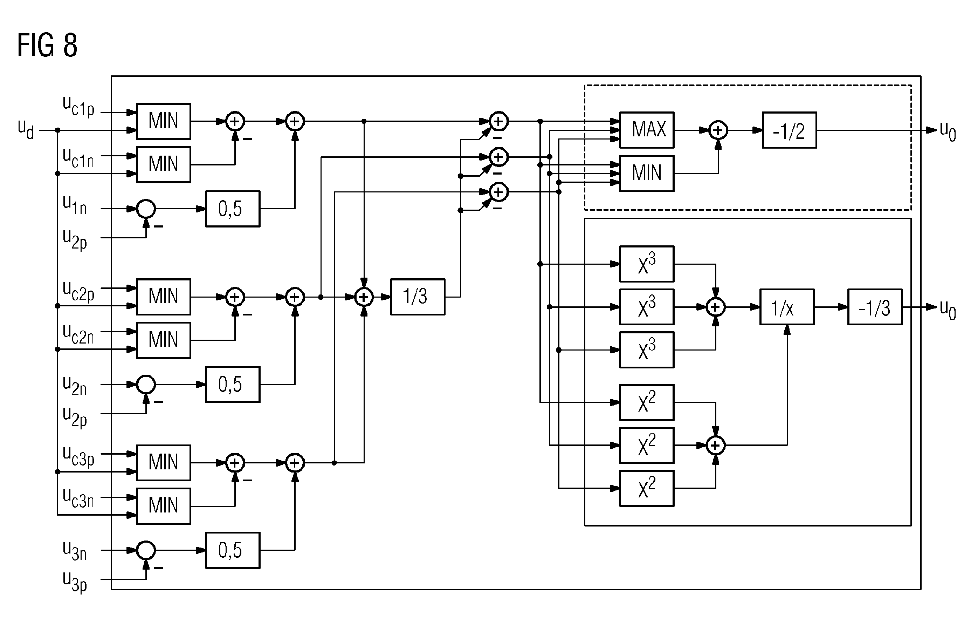

Fig. 8 ist ein Diagramm und zeigt schematisch die Berechnung des Nullsystems, wobei beide beschriebenen Varianten, d.h. sowohl die in den Fig. 4 und 5 gezeigte Überlagerung eines auf der 3. Oberschwingung beruhenden Nullsystems als auch die in den Fig. 6 und 7 gezeigte Überlagerung eines auf symmetrierter Sinusmodulation beruhenden Nullsystems enthalten sind. Als Eingangsgrößen dienen die sechs Spannungen der Stromrichtermodule des Grundsystems, wobei jeweils ein positiver Wert und ein negativer Wert berücksichtigt werden. In Fig. 8 ist rechts oben die Berechnung des auf symmetrierter Sinusmodulation beruhenden Nullsystems dargestellt, rechts unten die Berechnung des auf der 3. Oberschwingung beruhenden Nullsystems.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen (andere Harmonische im Nullsystem) können vom Fachmann hieraus abgeleitet werden, ohne den Schutzumfang der Erfindung zu verlassen.

### Bezugszeichenliste

- 1: Mehrstufenstromrichter
- 2: Phasenmodul
- 3: Phasenmodul
- 4: Phasenmodul
- 5: Konvertermodul
- 6: Submodul
- 7: Spannung
- 8: Modulspannung
- 9: Spannung
- 10: Modulspannung
- 11: Spannung
- 12: Modulspannung

## Patentansprüche

1. Verfahren zum Betreiben eines einen Spannungszwischenkreis aufweisenden modularen Mehrstufenstromrichters, der mehrere Stromrichtermodule aufweist, wobei jedes Stromrichtermodul eine Reihenschaltung von Submodulen aufweist und jedes Submodul einem Spannungsintervall zugeordnet ist und Schaltelemente und ein Energiespeichermittel aufweist, wobei einem Stromrichtermodul zur Vergrößerung der Aussteuerreserve eine eine Spannungsverschiebung zwischen Nullpunkten des modularen Mehrstufenstromrichters auf der Wechselspannungs- und der Gleichspannungsseite erzeugende Nullsystemspannung aufgeschaltet wird,
**dadurch gekennzeichnet, dass** Amplitude und Phasenlage der Ausgangsspannung eines Stromrichtermoduls mittels der Nullsystemspannung so gewählt werden, dass unter Berücksichtigung der Spannung der Energiespeichermittel eine möglichst große Aussteuerreserve erhalten wird.

2. Verfahren nach Anspruch 1,
**dadurch gekennzeichnet, dass** beim Festlegen von Amplitude und Phasenlage der Ausgangsspannung eines Stromrichtermoduls die Summe der Spannungen aller Energiespeichermittel eines Stromrichtermoduls berücksichtigt wird.

3. Verfahren nach Anspruch 1 oder 2,
**dadurch gekennzeichnet, dass** ein Kondensator als Energiespeichermittel verwendet wird.

4. Verfahren nach einem der vorangehenden Ansprüche,
**dadurch gekennzeichnet, dass** ein modularer Mehrstufenstromrichter mit drei Phasenmodulen und sechs Stromrichtermodulen verwendet wird.

5. Verfahren nach Anspruch 4,
**dadurch gekennzeichnet, dass** die Spannungen der Energiespeichermittel aller sechs Stromrichtermodule, insbesondere die Spannungen der sechs Kondensatoren, verschoben werden.

6. Verfahren nach einem der vorangehenden Ansprüche,
**dadurch gekennzeichnet, dass** eine auf der 3. Oberschwingung basierende Nullsystemspannung aufgeschaltet wird.

7. Verfahren nach einem der Ansprüche 1 bis 5,
**dadurch gekennzeichnet, dass** eine auf symmetrierter Sinusmodulation beruhende Nullsystemspannung aufgeschaltet wird.
